# EUROPEAN PATENT APPLICATION

(11) **EP 2 107 509 A2**
(43) Date of publication of application: **07.10.2009**
(21) Application number: 08172841.2
(22) Date of filing: 23.12.2008
(51) Int. Cl.: G06K 17/00, G06K 19/10

(54) **Tag specifying apparatus, tag specifying method, and tag specifying program**

(30) Priority: 31.03.2008 JP 2008092977
(71) Applicant: FUJITSU LIMITED, Kawasaki-shi, Kanagawa 211-8588 (JP)
(72) Inventor: Ono, Shinichi, Kawasaki-shi, Kanagawa 211-8588 (JP); Ishida, Kazuaki, Kawasaki-shi, Kanagawa 211-8588 (JP)
(74) Representative: Kreutzer, Ulrich

(57) **Abstract**

A tag specifying apparatus (10) includes a tag ID receiving unit (11) that receives from a tag a first tag ID for uniquely specifying the tag, an image analyzing unit (13) that analyzes an image of an object in which the tag is embedded and acquires a second tag ID, a tag ID comparing unit (15) that compares the first tag ID received by the tag ID receiving unit, and the second tag ID acquired by the image analyzing unit, and determines whether the first tag ID and the second tag ID match with each other, and an information acquiring unit (16) that acquires information from the tag when the tag ID comparing unit determines that the first tag ID and the second tag ID match with each other.

## Description

### FIELD

The embodiments discussed herein are directed to a tag specifying apparatus, a tag specifying method, and a tag specifying program that specify a tag, and acquire information from the specified tag.

### BACKGROUND

Recently, there are many cases in which a radio frequency identification (RFID) chip (hereinafter, the term "RFID" may be used to refer to an RFID chip or an RFID tag) is embedded in an object and operated, as observed in commercial product safety management utilizing traceability of the RFID, and installment of the RFID to a school gate. An active tag (near field wireless tag) is known as one type of the RFID tag.

Because wireless electric wave coverage of the active tag has a certain degree of distance, the active tag can be recognized by a reading device within the electric wave coverage. When the reading device enters wireless electric wave coverage of a plurality of active tags, the reading device receives information of all the active tags within the electric wave coverage.

One known technique estimates the position of the RFID tag by arranging and utilizing plural RFID reading devices and a camera device (for example, Japanese Patent Application Laid-open No. 2006-270456). Specifically, this technique estimates the position of the RFID tag based on the positions of the RFID reading devices on an image of an object, and the position and orientation of the camera device.

In the conventional technology, when the reading device enters wireless electric wave coverage of a plurality of active tags, the reading device receives information from all the active tags; therefore, for example, when there are objects in each of which an active tag is embedded, it is not possible to specify an active tag incorporated in an object of interest (for example, an object captured by a user's camera) and to acquire information of the specified active tag.

In the above-mentioned technique for estimating the position of the RFID, the position of the RFID tag in an environment is specified using a camera device and a plurality of reading devices installed in the environment. However, it is not possible to specify an RFID tag incorporated in an object of interest (for example, an object captured by a user's camera) and to acquire information of the specified RFID.

### SUMMARY

It is an object of the present invention to at least partially solve the problems in the conventional technology.

According to an aspect of an embodiment, a tag specifying apparatus includes a tag ID receiving unit that receives from a tag a first tag ID for uniquely specifying the tag, an image analyzing unit that analyzes an image of an object in which the tag is embedded and acquires a second tag ID, a tag ID comparing unit that compares the first tag ID received by the tag ID receiving unit, and the second tag ID acquired by the image analyzing unit, and determines whether the first tag ID and the second tag ID match with each other, and an information acquiring unit that acquires information from the tag when the tag ID comparing unit determines that the first tag ID and the second tag ID match with each other.

According to another aspect of an embodiment, a tag specifying method includes receiving from a tag a first tag ID for uniquely specifying the tag, analyzing an image of an object in which the tag is embedded to acquire a second tag ID, comparing the first tag ID received in the receiving, and the second tag ID acquired in the analyzing, to determine whether the first tag ID and the second tag ID match with each other, and acquiring information from the tag when the first tag ID and the second tag ID are determined to match with each other in the comparing.

According to still another aspect of an embodiment, a computer program product causes a computer to perform the method according to the present invention.

Additional objects and advantages of the invention (embodiment) will be set forth in part in the description which follows, and in part will be obvious from the description, or may be learned by practice of the invention. The object and advantages of the invention will be realized and attained by means of the elements and combinations particularly pointed out in the appended claims.

It is to be understood that both the foregoing general description and the following detailed description are exemplary and explanatory only and are not restrictive of the invention, as claimed.

### BRIEF DESCRIPTION OF DRAWINGS

Fig. 1 is a block diagram of an RFID specifying apparatus according to a first embodiment of the present invention;
Fig. 2 is a view of an example of an object installed in a station yard;
Fig. 3 is a view of a display example of target icons;
Fig. 4 is a view for explaining a specific use example of an RFID specifying apparatus;
Fig. 5 is a block diagram of an object according to the first embodiment;
Fig. 6 is a flowchart of a process operation of the RFID specifying apparatus according to the first embodiment;
Fig. 7 is a view for explaining a specific use example of an RFID specifying apparatus according to a second embodiment of the present invention;
Fig. 8 is a view for explaining a specific use example of the RFID specifying apparatus according to the second embodiment; and
Fig. 9 is a schematic diagram of a computer that executes an RFID specifying program.

### DESCRIPTION OF EMBODIMENTS

Exemplary embodiments of a tag specifying apparatus, a tag specifying method, and a tag specifying program according to the present invention are explained in detail with reference to the accompanying drawings.

### [a] First Embodiment

A configuration and a process flow of an RFID specifying apparatus according to a first embodiment of the present invention are explained in sequence, and an effect of the first embodiment is explained at the end. In the following application example, a steganography is embedded in a train guide board at a station (the guide board can be a time table or a route map at a bus stop) so that display contents of the train guide board, and information not displayed on the guide board such as an upcoming train departure guide are displayed on a user terminal such as a portable phone.

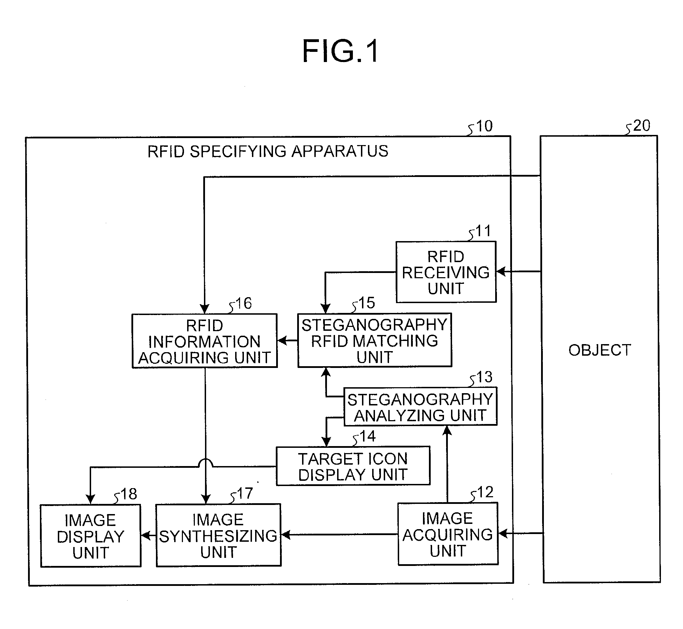

A configuration of an RFID specifying apparatus 10 is explained with reference to Fig. 1. Fig. 1 is a block diagram of the RFID specifying apparatus 10 according to the first embodiment. As depicted in Fig. 1, the RFID specifying apparatus 10 has an RFID receiving unit 11, an image acquiring unit 12, a steganography analyzing unit 13, a target icon display unit 14, a steganography RFID matching unit 15, an RFID information acquiring unit 16, an image synthesizing unit 17, and an image display unit 18. Processing of each unit is explained below.

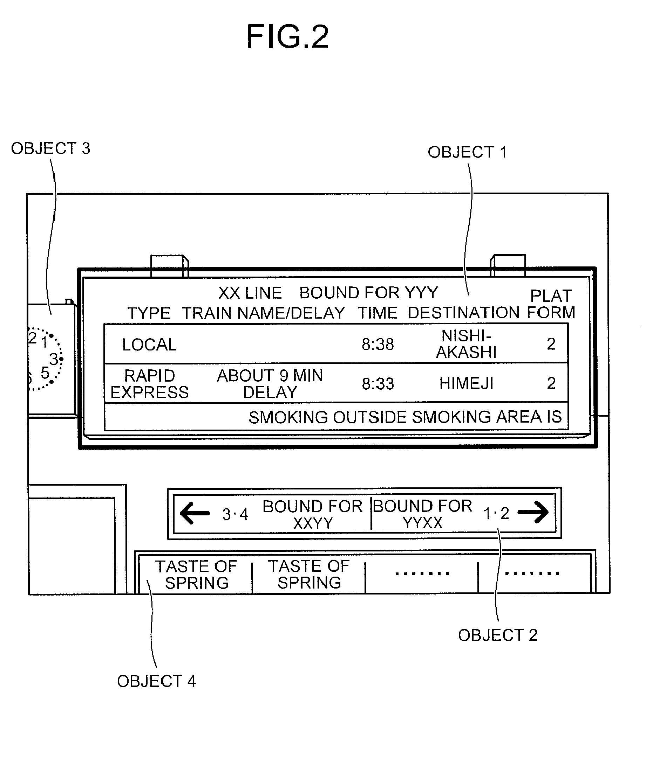

The RFID receiving unit 11 receives, from an RFID incorporated in an object 20, information of an ID for uniquely identifying the RFID. Specifically, the RFID receiving unit 11 receives an ID of the RFID transmitted continuously (intermittently) from any RFID present within wireless electric wave coverage, and notifies the ID to the steganography RFID matching unit 15. For example, when the RFID receiving unit 11 is within electric wave coverage of four objects as in an example of a station yard depicted in Fig. 2, the RFID receiving unit 11 receives IDs of all the RFIDs of the four objects.

The image acquiring unit (camera) 12 acquires image data. For example, the image acquiring unit 12 acquires an image of an object (for example, a store, an article, an advertising board, and a display), and notifies the image to the steganography analyzing unit 13 and the image synthesizing unit 17.

The steganography analyzing unit 13 analyzes the image of the object having an RFID embedded therein, and acquires an ID of the RFID. Specifically, the steganography analyzing unit 13 separates and decodes a steganography embedded in the image received from the image acquiring unit 12, acquires the ID of the RFID, and notifies the ID to the steganography RFID matching unit 15.

When the steganography analyzing unit 13 acquires an image including a plurality of objects (or when the steganography analyzing unit 13 recognizes a signal of a plurality of steganographies within an image), the steganography analyzing unit 13 issues an instruction for displaying target icons, and notifies the target icon display unit 14 of a position of the recognized steganography on image data.

When the steganography analyzing unit 13 receives an instruction for selecting the target icon from an input unit (not shown) thereafter, the steganography analyzing unit 13 separates and decodes the steganography of the selected object, acquires the ID of the RFID, and notifies the ID to the steganography RFID matching unit 15.

When acquiring an image including a plurality of objects, the target icon display unit 14 displays target icons for allowing a selection of any of the objects within an image. Specifically, when the target icon display unit 14 receives an instruction for displaying a target icon from the steganography analyzing unit 13, the target icon display unit 14 displays the target icon at the position on the image data where the steganography analyzing unit 13 has recognized the steganography.

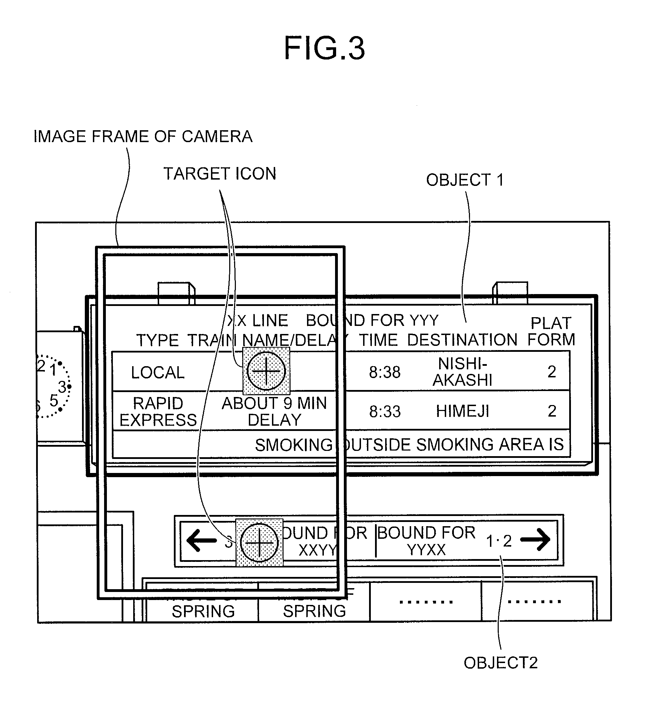

For example, when there are an object 1 and an object 2 within an image frame of the camera, and two steganography signals are recognized as exemplified in Fig. 3, the target icon display unit 14 displays target icons over or near the object 1 and the object 2, and allows a selection of one of the objects (guide boards).

The steganography RFID matching unit 15 compares the ID of the RFID received by the RFID receiving unit 11, and the ID of the RFID acquired by the steganography analyzing unit 13, and determines whether they match with each other. Specifically, the steganography RFID matching unit 15 compares the ID of the RFID received from the RFID receiving unit 11, and the ID of the RFID received from the steganography analyzing unit 13, and notifies the matched RFID to the RFID information acquiring unit 16.

When the steganography RFID matching unit 15 receives a plurality of IDs of RFIDs from the RFID receiving unit 11, the steganography RFID matching unit 15 compares the IDs of the RFIDs with the ID of the RFID received from the steganography analyzing unit 13 one after another to determine whether they match with each other, and notifies the matched RFID to the RFID information acquiring unit 16.

When an ID of an RFID is determined to match the ID of the RFID received from the steganography analyzing unit 13, the RFID information acquiring unit 16 requests and acquires information from the RFID having the ID. Specifically, the RFID information acquiring unit 16 acquires information from the RFID having the ID notified from the steganography RFID matching unit 15, and notifies the acquired information to the image synthesizing unit 17.

The image synthesizing unit 17 synthesizes image data notified from the image acquiring unit 12, and information notified from the RFID information acquiring unit 16 to form image information, and notifies the image information to the image display unit 18. The image display unit 18 displays the image information notified from the image synthesizing unit 17.

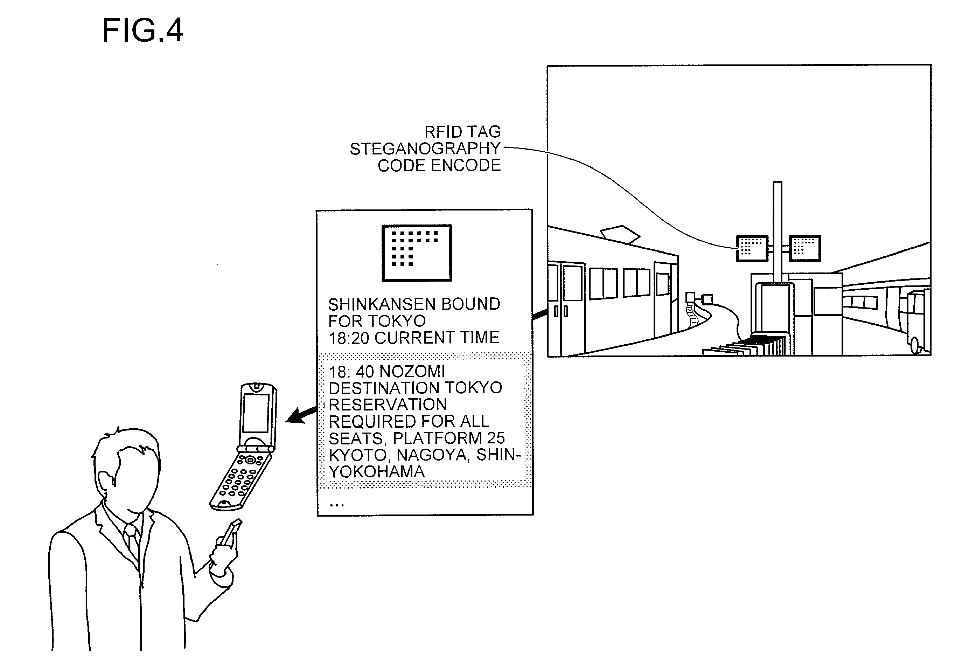

A specific use example of the RFID specifying apparatus 10 is explained with reference to Fig. 4. In this example, a camera of a portable phone to which the RFID specifying apparatus 10 is applied acquires image information of a guide board at a station yard. As depicted in Fig. 4, a user holds up the portable phone to the guide board, reads out a steganography code encoded in the guide board, and accesses information of an RFID instructed by the code.

This allows the user to acquire information of the RFID and see it on the portable phone even when the content displayed on the guide board cannot be seen by the user (for example, when the guide board is too far away, when the user wishes to see information to be displayed, and when the user is behind a surface on which a steganography is printed). The user also can acquire additional information not displayed on the guide board from the information of the RFID.

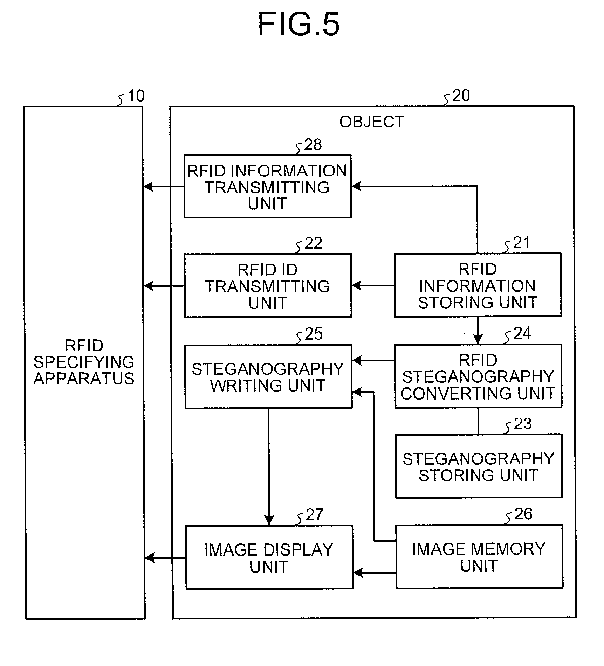

A configuration of the object 20 depicted in Fig. 1 is explained with reference to Fig. 5. Fig. 5 is a block diagram of the object 20 according to the first embodiment. As depicted in Fig. 5, the object 20 has an RFID information storing unit 21, an RFID ID transmitting unit 22, a steganography storing unit 23, an RFID steganography converting unit 24, a steganography writing unit 25, an image memory unit 26, an image display unit 27, and an RFID information transmitting unit 28. Processing of each unit is explained below.

The object in this example is an object that can display an image such as a display, but is not limited to this. The object may be a commercial product or an advertising board that do not have a display unit. In such a case, a steganography is embedded on the surface of the commercial product or the advertising board.

The RFID information storing unit 21 stores an ID of an RFID and information of the RFID. For example, in the example of the guide board of a station yard as exemplified in Fig. 4, the RFID information storing unit 21 stores information such as a time table of train, and a transfer guide as the information of the RFID.

The RFID ID transmitting unit 22 reads out the ID information of the RFID from the RFID information storing unit 21, and transmits the information continuously (intermittently). The steganography storing unit 23 stores therein the information of the steganography.

The RFID steganography converting unit 24 acquires the ID of the RFID from the RFID information storing unit 21, acquires the information of the steganography from the steganography storing unit 23, converts the ID of the RFID into a steganography code, and notifies the code to the steganography writing unit 25.

The steganography writing unit 25 writes in the steganography in image information displayed on the image display unit 27 using the steganography code of the ID of the RFID notified from the RFID steganography converting unit 24.

The image memory unit 26 stores therein the image information displayed on the image display unit 27. The image memory unit 26 may acquire the image information from a network, and store therein the acquired image information. The image display unit 27 displays the image information including the steganography written by the steganography writing unit 25. When having received a request from the RFID specifying apparatus 10, the RFID information transmitting unit 28 acquires the information of the RFID stored in the RFID information storing unit 21, and transmits the information to the RFID specifying apparatus 10.

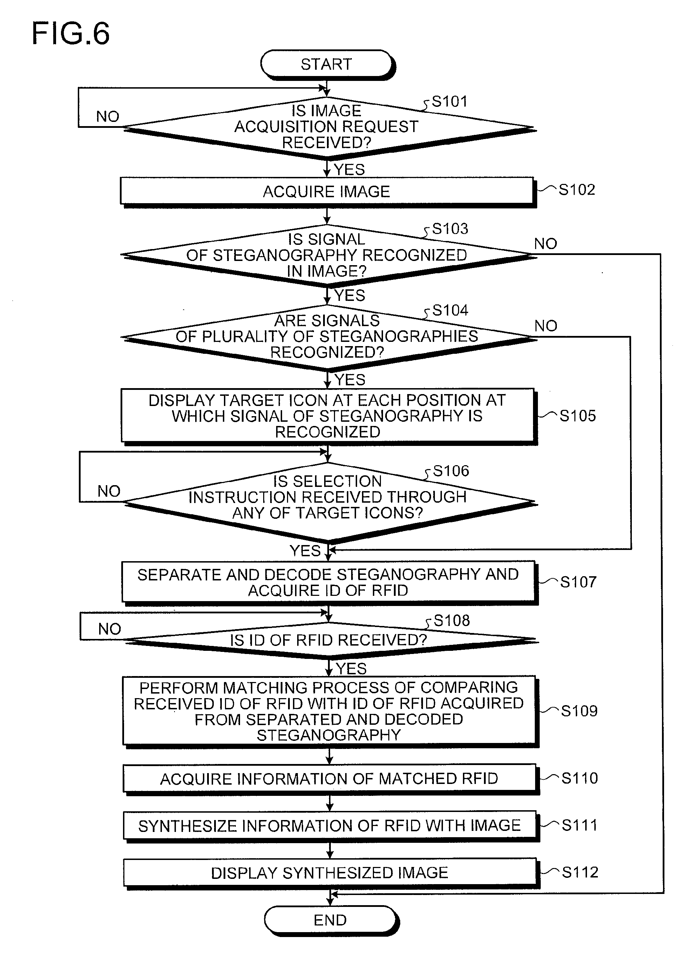

Processing by the RFID specifying apparatus 10 according to the first embodiment is explained with reference to Fig. 6. Fig. 6 is a flowchart of a process operation of the RFID specifying apparatus 10 according to the first embodiment.

As depicted in Fig. 6, when the RFID specifying apparatus 10 receives an image acquisition request from a user (Step S101), the RFID specifying apparatus 10 acquires an image (Step S102), and determines whether it can recognize a signal of a steganography within the acquired image (Step 103). When the RFID specifying apparatus 10 does not recognize a signal of a steganography within the image as a result (No at Step 103), the process ends.

When the RFID specifying apparatus 10 recognizes a signal of a steganography within the image (Yes at Step 103), the RFID specifying apparatus 10 determines whether it recognizes a plurality of signals of steganographies (Step S104).

When the RFID specifying apparatus 10 recognizes a plurality of signals of steganographies (Yes at Step 104), the RFID specifying apparatus 10 displays target icons over image data including the recognized steganographies (Step S105). When the RFID specifying apparatus 10 receives a selection instruction through any of the target icon (Yes at Step S106), the RFID specifying apparatus 10 separates and decodes the steganography, and acquires an ID of an RFID (Step S107). When the RFID specifying apparatus 10 recognizes a single signal of a steganography within the image (No at Step 104), the RFID specifying apparatus 10 does not display a target icon, but separates and decodes the steganography, and acquires an ID of an RFID (Step S107).

The RFID specifying apparatus 10 determines whether it has received an ID of an RFID from the RFID (Step S108). In other words, when the RFID specifying apparatus 10 is within electric wave coverage of an RFID, this means that the RFID specifying apparatus 10 has received in advance the ID of the RFID transmitted continuously (intermittently).

When the RFID specifying apparatus 10 has received the ID of the RFID from the RFID (Yes at Step S108), the RFID specifying apparatus 10 performs matching process of comparing the received ID of the RFID with the ID of the RFID acquired from the steganography (Step S109).

The RFID specifying apparatus 10 acquires information from the RFID having the matched ID (Step S110), synthesizes the image data and the information of the RFID (Step S111), and displays an image including the information of the RFID synthesized therein (Step S112).

As explained above, the RFID specifying apparatus 10 receives from an RFID the ID of the RFID that uniquely identifies the RFID, analyzes an image of an object having an RFID embedded therein to acquire the ID of the RFID, compares the ID of the RFID received from the RFID with the ID of the RFID acquired from the image to determine whether they match with each other, and when it is determined that they match with each other, acquires information from the RFID having the matched ID. Accordingly, it is possible to specify the RFID incorporated in an object of interest.

With the RFID specifying apparatus 10 according to the first embodiment, it is possible to obtain additional information attached to an object of interest (such as a commercial product, an advertising board, and an advertisement) from a position far away from the object (within a distance of wireless electric wave coverage of an active tag).

Furthermore, according to the first embodiment, when the RFID specifying apparatus 10 acquires an image including a plurality of objects, the RFID specifying apparatus 10 displays target icons for allowing a selection of any of the objects, within an image. Accordingly, it is possible to notify a user of presence of an RFID tag on an object pointed by a camera (an object of interest), and to selectively receive information of an RFID tag of the object pointed by the camera.

Moreover, according to the first embodiment, a steganography embedded in an image of an object is analyzed to acquire an ID of an RFID; therefore, it is possible to embed the ID of the RFID without obstructing a content displayed on the object.

### [b] Second Embodiment

Although an exemplary embodiment of the present invention has been described above, the present invention can be implemented in various forms. In the following, other exemplary embodiments of the present invention are explained.

### [b-1] Selection of Object

In the first embodiment, information such as display content of a train guide board is acquired from information of an RFID and displayed. Positional information and a map may be acquired from information of RFID, and a route guide map may be displayed.

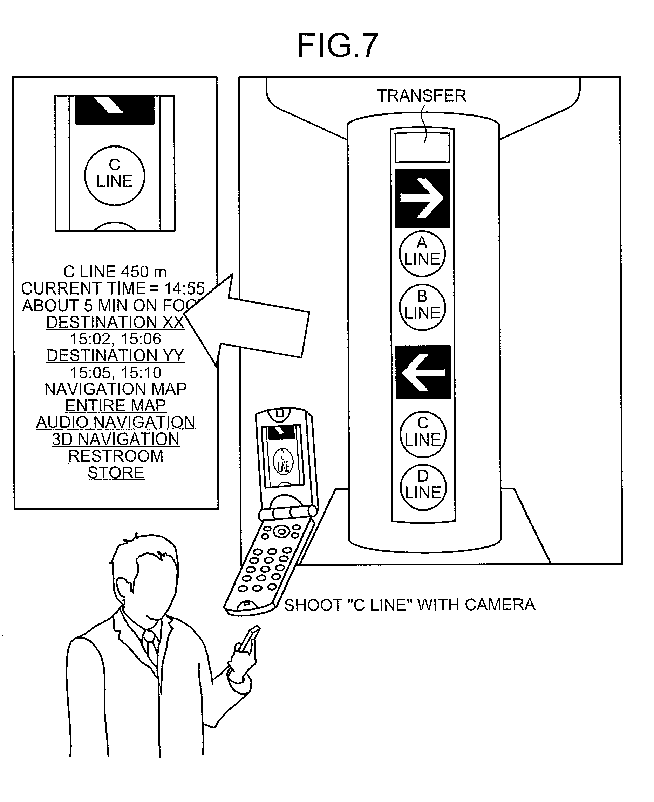

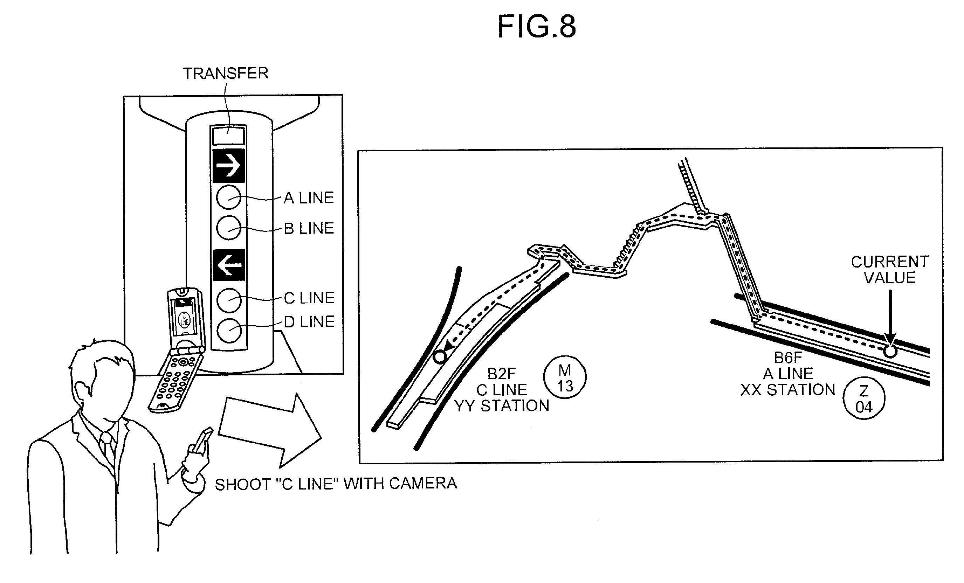

An example in which positional information and a map are acquired, and a route guide map is displayed is explained with reference to Figs. 7 and 8. A station guide display board exemplified in Fig. 7 stores therein positional information (a current position, and a position of a platform), and map information as information stored in an RFID incorporated for each line (A to D lines). When a user acquires an image of the station guide display board (C line in the example of Fig. 7) with a portable terminal to which the RFID specifying apparatus is applied, the RFID specifying apparatus performs a matching process similar to that of the first embodiment, acquires information of an RFID (a current position, a position of a platform of C line, and map information), and displays the information on the portable terminal.

When the user requests a route guide map (when the user selects "Navigation Map" displayed on a screen in the example of Fig. 7), the RFID specifying apparatus displays a route guide map which shows navigational information about the route to a station on the C line using the current position, the position of the platform of C line, and the map information as illustrated in Fig. 8. When the RFID specifying apparatus changes its position, and comes close to an object storing therein a different route guide map or a latitude/longitude information, the RFID specifying apparatus may update the current position of the previously loaded route guide map.

### [b-2] Selection of an Object

Although, in the first embodiment, when the RFID specifying apparatus acquires an image including a plurality of objects, target icons are displayed in the image and any of the objects is selected. The present invention is not limited to such embodiment. An object at or near the center of the image may be selected automatically, or an object occupying a large area in the image may be selected automatically. Alternatively, all the objects within the image may be selected and information of all the RFIDs may be acquired.

When an image including a plurality of objects is acquired, an image of an object at or near the center of the image is analyzed among the objects to acquire an ID of an RFID. Accordingly, it is possible to automatically determine an object of interest.

When an image including a plurality of objects is acquired, an image of an object occupying a large area in the image among the objects is analyzed to acquire IDs of RFIDs. Accordingly, it is possible to automatically determine an object of interest.

When an image including a plurality of objects is acquired, images of all the objects are analyzed to acquire an ID of an RFID. Accordingly, it is possible to easily determine an object assuming that all the images within the image are objects of interest.

### [b-3] Object

Although in the first embodiment, an ID of an RFID is embedded in the form of a steganography in an object, the present invention is not limited to such an embodiment. A QR code or a character recognition technique may be used instead of a steganography.

### [b-4] Program

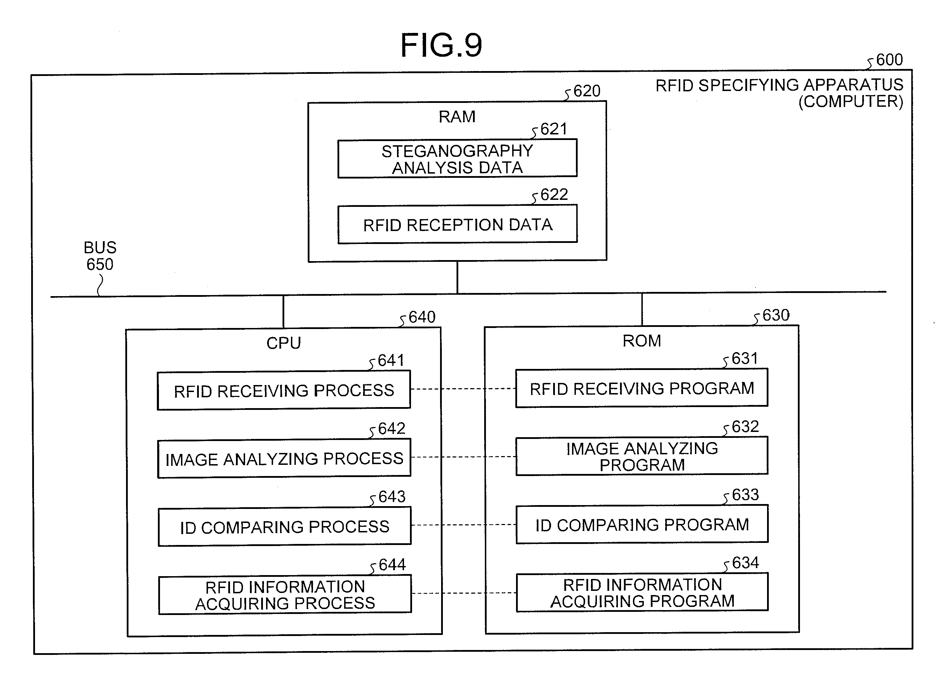

Various processing explained in the embodiments can be realized by executing a previously prepared computer program on a computer. An example of a computer that executes a computer program having a function similar to that of the embodiments is explained with reference to Fig. 9. Fig. 9 is a schematic diagram of a computer that executes an RFID specifying program.

As depicted in Fig. 9, a computer 600 as the RFID specifying apparatus is configured by connecting a RAM 620, a ROM 630, and a CPU 640 with a bus 650.

The ROM 630 stores in advance therein an RFID specifying program that function to realize functions similar to those of the above-described embodiments as depicted in Fig. 9: the RFID specifying program includes an RFID receiving program 631, an image analyzing program 632, an ID comparing program 633, and an RFID information acquiring program 634. The programs 631 to 634 may be appropriately integrated or dispersed in a similar manner as each component of the RFID specifying apparatus 10 depicted in Fig. 1.

The CPU 640 reads out and executes the programs 631 to 634 from the ROM 630, and accordingly the programs 631 to 634 perform an RFID receiving process 641, an image analyzing process 642, an ID comparing process 643, and an RFID information acquiring process 644, respectively as depicted in Fig. 9. The processes 641 to 644 correspond to the RFID receiving unit 11, the steganography analyzing unit 13, the steganography RFID matching unit 15, and the RFID information acquiring unit 16 depicted in Fig. 1, respectively.

The CPU 640 stores steganography analysis data 621 and RFID reception data 622 in the RAM 620, and performs a steganography specifying process based on the steganography analysis data 621 and the RFID reception data 622 stored in the RAM 620.

Thus, embodiments as described above have an advantageous effect in that it provides a tag specifying apparatus, a tag specifying method, and a tag specifying program that specify a tag incorporated in an object of interest.

All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the spirit and scope of the invention.

## Claims

1. A tag specifying apparatus (10) comprising:
a tag ID receiving unit (11) that receives from a tag a first tag ID for uniquely specifying the tag;
an image analyzing unit (13) that analyzes an image of an object in which the tag is embedded and acquires a second tag ID;
a tag ID comparing unit (15) that compares the first tag ID received by the tag ID receiving unit, and the second tag ID acquired by the image analyzing unit, and determines whether the first tag ID and the second tag ID match with each other; and
an information acquiring unit (16) that acquires information from the tag when the tag ID comparing unit determines that the first tag ID and the second tag ID match with each other.

2. The tag specifying apparatus according to claim 1, wherein the image analyzing unit analyzes a steganography embedded in the image of the object, and acquires the second tag ID.

3. The tag specifying apparatus according to claim 1 or 2, wherein the image analyzing unit has an icon display unit that displays target icons in the image for allowing a selection of any of a plurality of objects when the image analyzing unit acquires the image including the objects.

4. The tag specifying apparatus according to any one of claims 1 to 3, wherein the image analyzing unit analyzes an image of an object at or near the center of the image from a plurality of objects to acquire the second tag ID when the image analyzing unit acquires the image including the objects.

5. The tag specifying apparatus according to any one of claims 1 to 4, wherein the image analyzing unit analyzes an image of an object occupying a large area in the image from a plurality of objects and acquires the second tag ID when the image analyzing unit acquires the image including the objects.

6. The tag specifying apparatus according to any one of claims 1 to 5, wherein the image analyzing unit analyzes images of all of a plurality of objects and acquires the second tag IDs when the image analyzing unit acquires the image including the objects.

7. The tag specifying apparatus according to any one of claims 1 to 6, wherein the tag ID receiving unit receives the first tag ID from a near field wireless tag serving as the tag.

8. A computer program product having a computer readable medium including programmed instructions for specifying a tag, wherein the instructions, when executed by a computer, causes the computer to perform:
receiving from a tag a first tag ID for uniquely specifying the tag;
analyzing an image of an object in which the tag is embedded to acquire a second tag ID;
comparing the first tag ID received in the receiving, and the second tag ID acquired in the analyzing, to determine whether the first tag ID and the second tag ID match with each other; and
acquiring information from the tag when the first tag ID and the second tag ID are determined to match with each other in the comparing.

9. A tag specifying method comprising:
receiving (S108) from a tag a first tag ID for uniquely specifying the tag;
analyzing an image (S107) of an object in which the tag is embedded to acquire a second tag ID;
comparing (S109) the first tag ID received in the receiving, and the second tag ID acquired in the analyzing, to determine whether the first tag ID and the second tag ID match with each other; and
acquiring information (S110) from the tag when the first tag ID and the second tag ID are determined to match with each other in the comparing.
